Europäisches Patentamt

**European Patent Office**

Office européen des brevets

(11) Publication number: **0 147 097**

A2

# EUROPEAN PATENT APPLICATION

(21) Application number: **84308438.5**

(22) Date of filing: **05.12.84**

(51) Int. Cl.⁴: **G 02 B 6/28**
**H 02 M 5/257**

(30) Priority: **30.12.83 US 567109**
**19.03.84 US 590608**

(43) Date of publication of application:
**03.07.85 Bulletin 85/27**

(84) Designated Contracting States:
**AT BE CH DE FR GB IT LI NL SE**

(71) Applicant: **AMP INCORPORATED**
**P.O. Box 3608 449 Eisenhower Boulevard**
**Harrisburg Pennsylvania 17105(US)**

(72) Inventor: **Cvijanovich, George**
**156 Plymouth Avenue**
**Winston-Salem North Carolina 27104(US)**

(72) Inventor: **Bures, Milan**
**5294 Crown Point Drive**
**Tobaccoville North Carolina 27050(US)**

(74) Representative: **Gray, Robin Oliver et al,**
**BARON & WARREN 18 South End Kensington**
**London W8 5BU(GB)**

(54) **Fiber optic switching device.**

(57) A fiber optic switching device (10) which provides complete electrical isolation between switch control (30, 30') and load (14) is taught. Briefly stated, the device includes a light emitting circuit (16), a light receiving circuit (18) and a load control circuit (20). Power for the three circuits is derived from the power of the load to be controlled. A fiber optic cable is run to the light producing device (22) as well as the light receiving device (24) and is then connected to each other in a "Y" fashion (26). This is then run (28) to a switch (30, 30') which is capable of either reflecting or absorbing all or part of the light in the fiber optic cable thereby varying the light presented to the light receiving circuitry so as to turn the load (14) on or off or at a state inbetween.

FIG.1

FIG 2A

FIG 2B

## FIBER OPTIC SWITCHING DEVICE

This invention relates, generally, to a fiber optic switching device and more particularly, to a device for utilizing fiber optic cable in conjunction with an electronic switch for control of an electrical load.

Present day practices of power or load control generally require the wiring of switches to the load or power supply. While this method is entirely acceptable in most circumstances, it is particularly cumbersome, expensive as well as dangerous in situations where an explosive atmosphere is present. Wiring may also be disadvantageous where electrical shock to the operator by the switch may cause injury or death. Additionally, wiring generally requires the use of electrical cable which is rated for the load to be controlled and may, therefore, offer cost penalties in addition to the logistical problem of properly running wire in and around barriers.

For all of these reasons, it is becoming increasingly desirable to separate the load from the switching function. This is being done today through the use of low voltage switch wiring as well as the use of fiber optic "switches". The use of fiber optic "switches" is an extremely attractive concept in that it completely eliminates the possibility of explosion in explosive environments as well as the possibility of electrical shock. Additionally, fiber optic cables are generally quite easy to route requiring less attachment procedures than standardized cable. This, therefore, provides extremely significant cost and time savings. Accordingly, a number of devices have been introduced to take advantage of fiber optics in a variety of situations. An example of these devices may be found in U.S. Patent No. 4,379,289, "Fiber Optic Security System" issued April 5, 1983 to Peek; U.S. Patent No. 4,247,764, "Fiber Optic Proximity Instrument Having Automatic Surface Reflectivity Compensation" issued January 27, 1981 to Kissinger; and U.S. Patent No. 3,999,074, "Fiber-Optic Photoelectric Power Control Device" issued December 21, 1976 to Callaghan. However, these devices generally require relatively high precision or alignment between adjacent fibers or more than one cable to be operable.

It would be advantageous to have a device which utilizes fiber optics for controlling power or load situations. It is also advantageous to have a device which allows such fiber optics to be installed relatively easily requiring very little skill or expertise on the part of the installer and which differs only slightly from standard conventional wiring techniques. Further, it is desirable to have a device which utilizes only one fiber optic cable for operation or activation purposes. Also, it is desirable to have a device which is capable of being placed directly adjacent or integrated with the device or load to be controlled and which is relatively inexpensive to manufacture, easy to understand and is capable of being retrofitted to existing systems. Such a scheme is taught in the present invention.

Accordingly, it is desirable and as an object of the present invention a fiber optic switching device for controlling a load, comprising a light producing device; a light receiving device having an electrical output signal which is related to the light received by the light receiving device; a load control device connected to the output of the light receiving device for controlling the flow of electrical current through a load; a fiber optic cabling device optically interconnecting the light producing device, the light receiving device and a light adjustment switch device; and a light adjustment switch device optically interconnected with the light producing and the light receiving devices for optically controlling the amount of light which is received by the light receiving device.

Reference is now made to the description of the preferred embodiment illustrated in the accompanying drawings in which:

FIGURE 1 is a schematic diagram of the optical controller of the present invention;

FIGURES 2A and 2B are diagrammatic representations of a fiber optic splice or coupling for use with the present invention;

FIGURE 3 is a diagrammatic representation of an operational system utilizing the present device; and

FIGURE 4 is a diagrammatic representation of an alternate embodiment of a switching device.

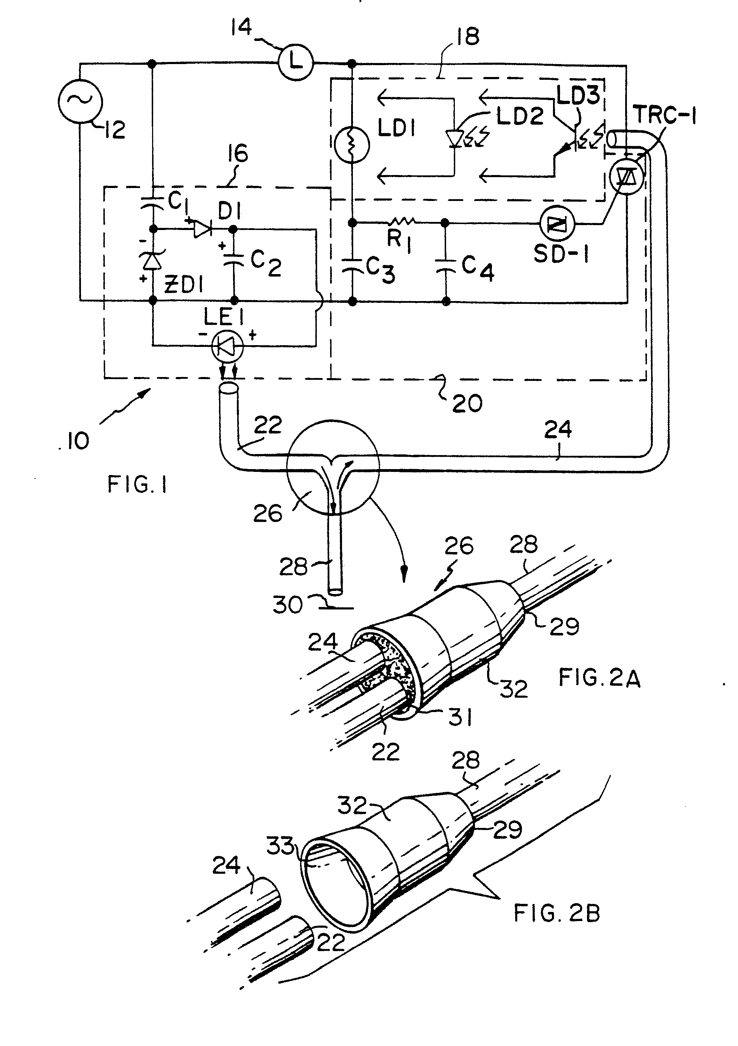

Referring now to Figure 1 there is shown a schematic diagram for the present invention. A fiber optic switch is shown generally at 10 and which receives power at the power input 12. Although an alternating current power source is shown, it is to be understood that DC may be utilized without departing from spirit and scope of the present invention. One side of the power input 20 enters the light transmission circuit shown generally at 16 and is attached to the anode of Zener diode ZD1, the cathode of light emitting diode LE1, the cathode of electrolytic capacitor C2, and one terminal of capacitor C3 and of capacitor C4, with C3 and C4 both contained in the load control circuit shown generally at 20. This same side of the power input 12 is also connected to one side of triac TRC-1, also contained in the load control circuit 20. The other side of power input 12 is connected to one side of capacitor C1 and one terminal of the load 14. It is to be understood that, although the load in the preferred embodiment of the present invention is an incandescent light, other loads can and may be controlled without departing from the spirit and scope of the present invention and may even include control circuitry for controlling different types of loads or higher power loads which are better controlled by other methods such as pneumatic or hydraulic. The remaining terminal of capacitor C1 is attached to the anode of diode D1 and cathode of Zener diode ZD1. The cathode of diode D1 is connected to the anode of capacitor C2 and to the anode of light emitting diode LE1. One terminal of capacitor C3 is connected to one terminal of resistor R1 and to one terminal of light detector LD1, which is contained in the light input or light receiving circuit shown generally at 18. The remaining terminal of light detector LD1 is connected to the other terminal of the load 14. The remaining terminal of resistor R1 is connected to the remaining terminal of capacitor C4 and to one terminal of switching diode SD-1 contained in the load control circuit 20. The remaining terminal of switching diode SD-1 is connected to the gate terminal of TRC-1. The remaining terminal of TRC-1 is then connected to the junction point where the light detector LD1 and the load 14 are connected. It is to be understood that, although a photoconductor LD1 is shown as being utilized, other light detection devices may be utilized. These may include photodiode LD2 or phototransistor LD3 which are shown in the light receiving circuit 18 for illustration purposes since only one such device is necessary for the operation of the present invention.

The light emitting diode LE1 serves as the light source for the fiber optic transmit cable 12 with LE1 being an integral part of light transmission circuit 16. Similarly, photoconductor LD1 serves as the light receiving mechanism for the light receiving circuit 18 via light received from the fiber optic receive cable 24. The fiber optic transmit cable 22 and the fiber optic receive cable 24 are joined at a fiber optic coupling area 26 into a unitary fiber optic intermediate cable 28 (as shown more clearly in Figures 2A and 2B). A light switch shown schematically at 30 either absorbs light which was transmitted from LE1 down the cable to the light switch 30 or reflects the light back through the intermediate cable 28, the fiber optic receive cable 24 and thence to the photoconductor LD1. It is to be understood that different types of cables may be utilized without departing from the spirit and scope of the present invention, although plastic is preferred because of its low cost. Additionally, the coupled area 26 may be part of a star coupler as is commonly used in fiber optic applications and is readily known and available to one skilled in the art. Further, the cables 22, 24, 26 and intermediate cable 26 may be comprised of a light pipe which is part of an extruded or molded structure having light transmission properties therein without departing from the spirit and scope of the present invention.

The operation of the optical power switch 10 is relatively simple and may be described as follows. Through the use of capacitor C1 and Zener diode ZD1, which are placed across the power input 12, a relatively constant voltage is realized with diode D1 and capacitor C2 being utilized to rectify and smooth out the AC voltage introduced from power input 20. This, therefore, provides a suitable voltage and current for light emitting diode LE1 which remains constantly energized and without a transformer thereby minimizing cost and size. It is to be noted that in the preferred embodiment of the present invention, the light emitting diode LE1 produces an infrared light source thereby minimizing any effects which may come about due to a leakage of light in the system from extemporaneous light sources. It is to be understood, however, that other light emitting sources can and may be utilized without departing from the spirit and scope of the present invention.

Once light is introduced into the fiber optic transmit cable 22, it goes through the coupled area 26 and the intermediate cable 28, and exits the end of the fiber optic intermediate cable 28 which is disposed in the adjustment switches 30, 30' (Figures 2, 3 and 4). Thereafter, depending upon the distance between the end of the fiber optic intermediate cable 28 and the reflective areas 52, 64, light may or may not be reflected back into the intermediate cable 28. In the event that no light is reflected back into the intermediate cable, then the load 14 remains turned off. However, as long as some light is reflected back into the intermediate cable 28, it will then enter the coupled area 26 as shown, into the fiber optic receive cable 24. The light will then exit the fiber optic receive cable 24 and thereby strike the light detector LD1 which, in the preferred embodiment of the present invention, is a photoconductor or photoresistor. However, as mentioned previously, it is to be understood that other types of light detectors such as a photodiode LD2 or a phototransistor LD3 or other similar devices may be utilized without departing from the spirit and scope of the present invention. When light strikes the photoconductor LD1, the internal resistance of the device goes down. This thereby allows a current to flow through the load L and the photoconductor LD1 so as to charge capacitors C3 and C4 which act as a timing circuit. When capacitors C3 and C4 reach an appropriate voltage, the gate of triac TRC-1 is energized thereby firing TRC-1 with the result that capacitors C3 and C4 are discharged through switching diode SD-1 while current is allowed to flow through TRC-1. This thereby allows current to flow through the load 14 thereby turning the load 14 "on". Accordingly, the amount of light that strikes photoconductor LD1 determines the drop in resistance in the device and thereby determines the current flow therethrough so as to determine the charging rates of capacitors C3 and C4 which in turn determines the angle of firing for TRC-1. In this manner, the amount of light reflected back to the detectors determines the amount of current allowed to flow through the load. In the preferred embodiment of the present invention, the load L is, as mentioned, an incandescent light, although it must be understood that other loads may be utilized such as, for example, motors, relays, machinery, etc.

Referring now to Figures 2A and 2B, there is shown in greater detail, the fiber optic coupling area 26 shown generally in Figure 1. Here it can be seen how the fiber optic transmit cable 22 and the fiber optic receive cable 24 are insertable into a coupling shown generally at 28. The coupling 26 has a multi-cable entry area 33 and a cable-exit area 29. The fiber optic intermediate cable 28 is introduced into the cable exit area 29. Upon the introduction of cables 22, 24 and 28, a potting or filling compound 31 is injected into the coupling 32. It is to be understood, however, that this filling or potting compound 31 may or may not be used without departing from the spirit and scope of the present invention. It is to be remembered that since the present invention utilized the relative absence or presence of light, the quality of fiber optic cable as well as fiber optic connections can be very low.

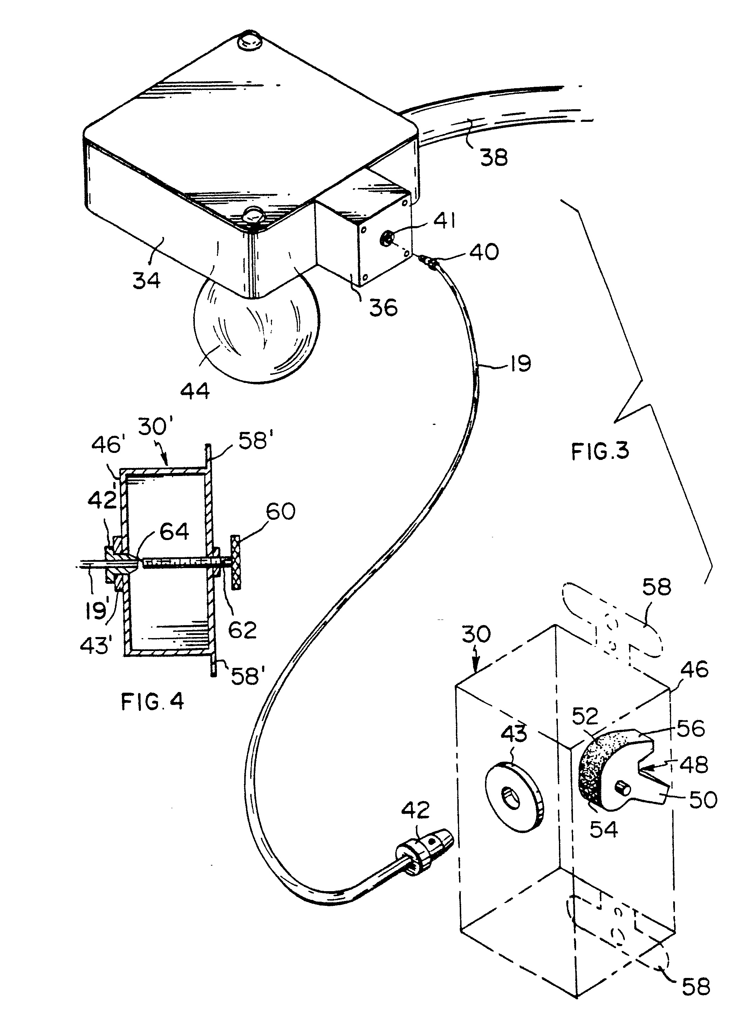

Referring now to Figure 3, there is shown the present invention in an installed application. Shown is a receptacle box 34 which serves as a mounting fixture for a light bulb 44. A power cable 38 which, in the preferred embodiment of the present invention, supplies 120VAC to the light bulb 44 enters the receptacle box 34. Adjacent the receptacle box 34 is the power switch enclosure 36 which would house the optical power switch 10, fiber optic cables 22, 24 and 28 as well as the fiber optic coupling area 26. Electrical interconnection between the optical power switch 10 (not shown) in the power switch enclosure 36 and the light bulb 44 is relatively simple and straight forward to one skilled in the art and is, therefore, not shown. Disposed on the side of the power switch enclosure 36 is a fiber optic receptacle 41. The fiber optic receptacle is suitably adapted to mate with a fiber optic connector 40. The fiber optic connector 40 is then connected to the end of an interconnect cable which connects fiber optic connector 42 via a fiber optic receptacle 43 which is disposed in the wall switch enclosure 46. The wall switch enclosure 46 has disposed therein a toggle switch shown generally at 48 which is comprised of actuating member 50 and a surface shown generally at 52. Disposed on the surface 52 is a reflective area 56 which is suitable for reflecting light while a nonreflective area 58 is disposed adjacent thereto. In this manner, movement of the actuating member 50 similar to that of an ordinary wall switch will cause the light bulb 44 to vary from full on to full off. Also disposed on the wall switch enclosure 46 are two pieces of switch mounting hardware 58. The switch mounting hardware 58 allows the wall switch enclosure 46 to be compatible with standard wall switch enclosure boxes such as are normally used in standard wiring (not shown).

Referring now to Figure 4, there is shown a diagrammatic view of an alternate type of adjustment switch 30'. Here there

is shown a light adjustment switch shown generally at 30' which is comprised of a dimmer switch enclosure 46'. Fiber optic connectors 42', 43' are utilized to interconnect the cable 24' to the enclosure 46'. An adjustment shaft 62 has a reflective area 64 disposed at the end thereof and an adjustment knob 60 at the other end. The adjustment shaft 62 in the preferred embodiment of the present invention is a threaded bolt which by turning of the knob 60 allows the reflective area 64 to come closer to or further away from the end of the cable 19'. In this manner, when the reflective area 64 is at a distance from the end of the cable 19', the light emitting from the cable 19' is scattered and thereby only a minimal amount of light or none at all is reflected back into the cable 19'. Conversely, by turning the adjustment knob 60 so that the reflective area 64 is close to the end of the cable 19', light exiting from the cable 19 is reflected back into the cable.

Accordingly, electrical power may be run to each load device whether it is an electrical receptacle, switching mechanism, light bulb as well as any other electrical or mechanical device requiring power. A power switch enclosure 36 is placed adjacent the particular electrical load and in the preferred embodiment of the present invention would mount directly onto a receptacle box 34 in a manner similar to that by which bell or thermostat transformers presently mount onto electrical boxes. Fiber optic cables such as 19, 19' are then run between the particular load to individual switches 30, 30'. The fiber optic cable 19 is then cut and terminated with the appropriate fiber optic connectors on either end. Cable may be run from a switch enclosure 36 such that three or four (or as many as desired) way switches may be utilized. In this manner, the intermediate cable 28 instead of being terminated to the fiber optic receptacle 41 would use a fiber optic coupling area such as but not limited to 26 in a reverse manner and would encompass as many cables as desired. It is also to be understood, however, that the coupling area such as 26 may be accomplished outside of the enclosure 36 through the use of fiber optic star couplers which are readily available and are well known to one skilled in the art. A wall switch enclosure 46, 46' is placed into a suitable electrical box such as is now used with wall switches with the interconnect cable 19, 19' having a fiber optic connector 42, 42' at the end plugged into the fiber optic receptacle 41. In this manner, the switch enclosure as well general wiring techniques of standard present day wiring are readily usable with the present invention.

It is to be remembered that many variations of the present invention may be utilized without departing from the spirit and scope of the present invention. Different types of fiber optic connectors may be utilized or different types of couplings for joining or diverging fiber optic cables. Additionally, different types of switches other than a toggle switch such as, for example, a push button or rotary switch may be used or single on/off switches having only a fully reflective and a nonreflective area. Further, the toggle switch utilized may be of an infinitely variable type having a surface which varies from reflective through full absorption thereby implementing an on-off-on control. Also, different ways of integrating the optical power switch with the load may be accomplished such as, for example, remote positioning of the power switch or as a plug in feature into an existing receptacle with a load then plugged into the optical power switch module or as a screw-in insert into a light socket. In this manner, the fiber optic cable can be either concealed inside walls or behind appropriate barriers or may have an adhesive backing which is then simply taped to a wall or barrier and run to a switch. Also, different components such as a silicon controlled rectifier instead of a triac may be utilized while differing circuits entirely may also be used.

Therefore, in addition to the above enumerated advantages, the disclosed invention produces a fiber optic switching device which is relatively easy to manufacture, usable as a new or retrofit item and which is extremely inexpensive to manufacture.

Further, the device provides absolute electrical isolation and may therefore be used in hazardous or explosive areas as an interface between man and machine thereby eliminating the possibility of leakage current and therefore electrical shock.

CLAIMS:

1.    A fiber optic switching device for controlling a load (14) having a light producing device (LE1), a light receiving device (LD) having an electrical output signal which is related to the light received by the light receiving device, a load control device (20), a fiber optic transmit cable (22), a fiber optic receive cable (24), a fiber optic coupling device (26) and a fiber optic intermediate cable (28) wherein the fiber optic cables interconnect the light producing and light receiving devices with a light adjustment switch device (30), characterized in that:

the load control device (LD) is adapted to receive the electrical output signal (18) of the light receiving device so as to vary the flow of electrical current through the load in response to the amount of light received by the light receiving device (LD) wherein the fiber optic transmission (22) and receive cables (24) have one end optically coupled to the light producing device and the light receiving device respectively with the remaining ends of the fiber optic transmission cable (22) and the fiber optic receive cable (24) disposed in the coupling device (26) with the fiber optic intermediate cable (28) having one end optically connected to the fiber optic coupling device (26) so as to receive light from the light transmission device (LE) and introduce light into the light receiving device (LD) and the other end optically connected to a light adjustment switch device (30, 30') for optically controlling the amount of light emanating therefrom which is reintroduced into said fiber optic intermediate cable (28) thereby controlling the amount of light received by the light receiving device (20) and thereby controlling the flow of electrical current through the load (14).

2.    A device according to claim 1 further characterized in that the light adjustment switch device (30, 30') is comprised of a toggle switch (48) having a reflective (56) and a nonreflective (54) surface thereon, thereby reflecting or absorbing light.

3. A device according to claim 1 further characterized in that the light producing device is comprised of a light emitting diode (LE1).

4. A device according to claim 1 further characterized in that the light receiving device is comprised of a photoresistor (LD1) or a phototransistor (LD3) or a photodiode (LD2).

5. A device according to claim 1 further characterized in that the light producing device produces infrared light.

6. A device according to claim 1 further characterized in that the load control device (20) is comprised of a triac (TRC-1) or the like in series circuit relationship with the load (14) and having a firing circuit connected to the gate terminal of the triac thereby controlling the amount of current through the triac and thereby the load.

7. A device according to claim 6 further characterized in that the firing circuit is comprised of a timing network (R1, C3, C4) and a switching diode (SD-1).

8. A device according to claim 1 further characterized in that the fiber optic transmission cable (22) and the fiber optic receive cable (24) are connected in a "Y" fashion in the fiber optic coupling device (26).

9. A device according to claim 1 further characterized in that the light adjustment switch device (30') is comprised of a reflective surface (56, 64) adjacent the fiber optic intermediate cable such that light exiting from the fiber optic intermediate cable strikes the reflective surface wherein the proximity of the light reflective surface with respect to the fiber optic intermediate cable determines the amount of light which is reflected back and thereby reintroduced into the fiber optic intermediate cable (28) and which is in turn received by the light receiving device.

10. A device according to claim 1 further characterized in that said light adjustment switch device (30) is comprised of an adjustable reflective surface (52) which is adjustable relatively from presenting a fully reflective surface (56) to a relatively

0147097

nonreflective surface (54), the adjustable reflective surface (56) being adjacent the fiber optic intermediate cable such that light exiting from the fiber optic intermediate cable strikes the adjustable reflective surface with the adjustable reflective surface determining the amount of light which is reintroduced into the fiber optic intermediate cable and which is in turn received by the light receiving device.

11. A fiber optic switching device for controlling a load (14) having a light producing device (LE1), a light receiving device (LD) having an electrical output signal which is related to the light received by the light receiving device, a load control device (TRC-1), a fiber optic cabling device (22, 24, 26, 28), wherein the fiber optic coupling device interconnects the light producing and light receiving devices with a light adjustment switch device (30, 30'), characterized in that:

the load control device (20) is adapted to receive the electrical output signal of the light receiving device so as to vary the flow of electrical current through the load (14) in response to the amount of light received by the light receiving device wherein the fiber optic cabling device (22, 24, 26, 28) optically interconnects the light producing device, the light receiving device and the light adjustment switch device (30, 30') with the light adjustment switch device (30, 30') optically controlling the amount of light emanating from or which is reintroduced into said fiber optic coupling cables thereby controlling the amount of light received by the light receiving device and thereby controlling the flow of electrical current through the load.

FIG. 1

FIG. 2A

FIG. 2B

FIG.3

FIG.4